# EUROPEAN PATENT APPLICATION

(11) **EP 1 811 378 A2**
(43) Date of publication of application: **25.07.2007**
(21) Application number: 06256505.6
(22) Date of filing: 21.12.2006
(51) Int. Cl.: G06F 11/10

(54) **A computer system, a computer and a method of storing a data file**

(30) Priority: 23.01.2006 US 760936 P
(71) Applicant: XYRATEX TECHNOLOGY LIMITED, Havant, Hampshire PO9 1SA (GB)
(72) Inventor: Courtney, Timothy Edward Glynn, Fareham, Hampshire PO16 7QW (GB)
(74) Representative: Freeman, Avi

(57) **Abstract**

The invention relates to a method of providing redundancy in access to a data file, the method comprising: fragmenting the data file into plural data file fragments; generating at least one supplemental fragment to enable the data file to be reconstructed in the absence of one or more of the other data file fragments; and storing each of the fragments on a respective independent storage medium, wherein in with each fragment, metadata is stored identifying the location of at least one of the other fragments.

## Description

The present invention relates to a computer system, a computer for use in the computer system and a method of storing a data file. In a particular embodiment, the invention relates to a method of providing redundancy in access to a data file.

In organisations today an important aspect of the running of the organisation is the ability to provide access to important and essential data. Typically some data needs to be available in a short time frame for users, e.g. of the order of milliseconds, but other data can tolerate access times in the order of seconds. For example, documents such as marketing reports (internal and external), data sheets, requirements documentation, financial data and analysis of it, e-mail logs etc. fall into this category.

For example, consider a company that performs financial modelling and analysis as part of an investment management business. The models and the results (raw and analysed) are wanted by users on a regular basis as a reference source. The models and results will be a large volume of data. For example, the access to the data may involve transfer of gigabits of data per day per model user.

In such a company, it is necessary to have a full backup of the models and the results to provide disaster recovery so that a disaster in one storage location does not preclude the normal operation of the business. Furthermore, in the case of certain financial and correspondence logs it is a statutory requirement in some countries that the data be available to law enforcement agents upon request although a reasonable time is usually afforded to accomplish this. Such a backup system is said to provide "redundancy" as it ensures that at all times there is a spare or redundant copy of the data that can be used when the situation so requires.

A known process and computer system for providing such redundancy relies on "mirroring" whereby a complete replica of a file system is maintained at an off-site location. In the event of the original data being destroyed it is possible to resurrect the business from the other copy, i.e. the mirrored copy stored at the off-site location. In some situations multiple copies of the same data may be provided in a corresponding number of locations. Clearly, with such multiplication of the data, memory requirements can be significant. Therefore, such systems are expensive.

A redundancy providing system such as that described above may be referred to as a "RAID 1" system. RAID (redundant array of inexpensive disks or redundant array of independent drives) is a well known system and methodology by which redundancy can be provided in the storage of data. There are a number of different "levels" of RAID systems. With a RAID 1 system, data or a file system is mirrored meaning that an exact replica of the file system is provided on a second drive or hard disk or a second plurality of drives or hard disks, (optionally at a location remote from the original). If some disaster befalls the first of the drives or hard disks (or plurality of drives or hard disks), then the copy of the file system on the second disk (or plurality of drives or hard disks) may be used. As mentioned above, such a system is expensive and will become more so as data storage capacity requirements increase as for each copy of data, an equivalently sized disk or memory resource is required.

In RAID 5 systems, block-level striping is utilised with the inclusion of "parity" data. A file is split up into a number of blocks or fragments and for each set of blocks or fragments, a parity block or fragment is determined using one or more well known algorithms. A central controller is utilised to distribute each of the stripes or blocks of a file to one of plural drives or other such storage media. Within a RAID 5 system, the term "strip" is often used synonymously with what is called a block or "fragment" in the present application. Fragment used herein refers to any portion of a data file.

Within RAID 5 technology, striping refers to the practice of placing each block of a set of blocks (i.e. each strip of a stripe) onto a different one of the storage devices or disks, thereby allowing parallel access to that stripe. Typically, in RAID 5, each stripe includes one supplemental or parity strip.

There are some cases, in which it might be advantageous to split a single file into only one stripe rather than multiple stripes as then only a single strip is provided on any given drive. The reason that this is not always the case is that it is often true that a computer program needs to access and modify a part of a file rather than a whole file. If the file is stored as only one stripe it is likely that all the data required during any accessing of the file will be in a single one of the strips and so on only one drive Thus, there is no parallelism in the access to the data. If the file is stored as multiple stripes then each strip is small and so commands to read data from all the drives can be sent. The advantage of this is that hard disks can only perform access to the stored data on the disk at a lower rate than e.g. 800Mbit/s or less than that, e.g. 2Gbit/s or more, at which they communicate with external devices. By reading multiple strips in parallel a high speed external communication link can be fully utilised.

The parity data is distributed to one other of the plural drives. Where a file is split into only a single stripe if a file is fragmented into b file fragments, then b+1 drives are required, one to store each of the fragments of the data file and one to store the supplemental or parity fragment. The parity data is such that when one of the drives fails (and therefore the fragments stored on the failed drive become unavailable) the files of the file system can still be accessed. This is achieved by use of the parity data to calculate the missing content. An example of a well known algorithm for achieving this functionality relies on the use of an "XOR" logical function.

RAID 5 systems are commonly used in servers of organisations. However, a problem with a RAID 5 system is that a central controller is required having knowledge of the location of each of the blocks of a file. Such an arrangement is computationally complex and is therefore undesirable. US-A-2004/0117549 discloses such an arrangement. In this case, the storage system is distributed meaning that each of the storage media is located at a location remote to the others. A controller with knowledge of the location of each of the fragments of all the files of the file system is provided for accessing the desired storage media when a particular file is required. Such a controller is extremely complex and expensive and will become more so as file sizes and data repository sizes increase.

According to a first aspect of the present invention there is provided a method of storing a data file, the method comprising: fragmenting the data file into plural data file fragments; generating at least one supplemental fragment to enable the data file to be reconstructed in the absence of one or more of the other data file fragments; storing each of the fragments on a respective independent storage medium, wherein in with each fragment, metadata is stored identifying the location of at least one of the other fragments.

Therefore in the absence of one of the fragments, if the location of only one other of the fragments is known it may be possible for all the remaining fragments to be located and therefore the data file to be retrieved. Furthermore, this can be achieved without the provision of a complex and expensive central controller or server with knowledge of the location of all of the file fragments. In a large file system of a company the volume of data that must be accessible to a central server if it is to have knowledge of the location of all of the fragments of all of the files on the file system is significant. Such a controller is not required when a method of storing data according to the first aspect of the present invention is used.

Preferably, in with each fragment metadata is stored identifying the location of at least two of the other fragments. Thus, redundancy may also be provided in access to the data file since if any one of the fragments becomes unavailable because, e.g., its drive fails, it is still possible to retrieve the data file using the remaining fragments (either all of the actual data file fragments or all but one of the actual data file fragments and the supplemental fragment).

Generally to ensure redundancy is provided, a system adding n supplemental fragments should store the location of n+1 other fragments with each fragment. Therefore where only the location of one other fragment is provided with each fragment, n=0 and thus no redundancy is provided. No supplemental fragments are required: In this case the significant benefit provided is the ability to store fragments of a data file in a distributed manner without requiring a complex central server with knowledge of the location of each of the fragments of any particular file.

Preferably, the method comprises encrypting the location (i.e. the meta data describing the location) of the at least one other fragment. By encrypting the data describing the location of the at least one other fragment, security is provided as even if a third party such as a hacker obtains one of the fragments, he will be unable to locate the other fragments as the location of the other fragments will be encrypted. Furthermore the possibility exists that only the location of the at least one other fragment will be encrypted. This is all that needs to be encrypted to stop a third party hacker gaining access to the other fragment. The single fragment that the hacker already has will be of no use without the other fragments and therefore the data content itself of the fragment does not need to be encrypted to provide security. This is extremely desirable as encryption is computationally expensive and complex.

According to a second aspect of the present invention there is provided a computer for connection in a computer system comprising plural computers each connected to a common communications network and remote from each other and the said computer, the said computer having a processor, arranged to fragment a data file into plural data file fragments, the computer being arranged to send to each of the other computers connected to the common communications network one of the fragments of the data file, wherein each of the fragments includes metadata containing the location of at least one and preferably at least two of the other fragments.

Preferably, the computer is also arranged to generate a supplemental fragment related to the data file fragments and to send to another of the computers the supplemental fragment, wherein the supplemental fragment includes metadata containing the location of at least one and preferably at least two of the other fragments.

Preferably, the supplemental fragment is an XOR fragment for use in a RAID 5 type or other such redundancy providing system.

According to a third aspect of the present invention there is provide a method for retrieving a data file stored on a computer system according to the second aspect of the present invention, the method comprising: requesting from a computer local to a user retrieval of the file; from the computer local to a user sending a request to each of the computers of the computer system requesting transmission to the local computer of the fragment stored on the respective computer; at the local computer reconstructing the data file using the received file fragments of data and/or the supplemental fragments data, wherein reconstruction occurs in the absence of one or more of the fragments.

According to a fourth aspect of the present invention, there is provided a computer having a processor and plural independent storage media, the processor being arranged to fragment a data file into plural data file fragments, and to send to each of the independent storage media one of the fragments of the data file, wherein each of the fragments includes metadata containing the location of at least one, preferably two, of the other fragments.

Preferably, the processor is arranged to generate a supplemental fragment related to the data file fragments, and to send to another of the independent storage media the supplemental fragment, wherein the supplemental fragment includes metadata containing the location of at least one and preferably at least two of the other fragments.

In an embodiment, the invention provides a system in which a server knows what files there are on a particular system and also knows where one or more of the fragments of the files are located. An iterative process can then be used to retrieve the other fragments of a file so that the file can be reconstructed for a user.

For example, consider an organisation with sites in New York, London, Tokyo and Paris. The New York site has some data that it wants to be available in a disaster proof manner but with longer access times tolerated in return for cheaper cost of storage. When storing a file, a main server, e.g. in New York, functions to break the file into three fragments of equal size and computes an XOR function to generate a fourth fragment. The four fragments are then distributed amongst the four sites.

When a site receives a fragment, it is farmed out to local storage based on where there is space. When the file is wanted again, the main server in New York requests the fragments it needs from the other three storage sites. This could be either the three actual file fragments or the two fragments and the XOR fragment if one site is unavailable. The fragments are all returned to the central server where a user is based and the file is then reconstructed. The user thus has access to the desired file. Thus, in an embodiment, the storage server appends the location of other fragments of a file to the fragments that it sends, so that possession of one fragment allows a user to locate the other fragments when only the location of one of the fragments is known. A complex and expensive server with knowledge of the location of all of the other fragments is therefore not required.

Preferably, to provide redundancy, i.e. the ability to retrieve a file even where one of the storage media or servers in the system has failed, the location of at least two of the fragments must be known. Consider a system like that described above where the New York device knows the location of the Paris device, the Paris device knows the location of the Tokyo device, the Tokyo device knows the location of the London device and the London device knows the location of the New York device. If the Paris device is inaccessible, the New York device is unable to retrieve any further fragments of the file as it only has access to the one fragment it owns. It has no way of finding the London and Tokyo fragments. However, if the New York device knows two locations then this problem is alleviated. There remains a need for the knowledge of other locations to be circular in nature such that each location knows the location of two other fragments and that the location of each fragment is known by two other locations.

Therefore, a computer and computer system is provided that enables redundancy in data access to be achieved without requiring the significant amounts of memory required by simple "mirroring" redundancy system, e.g. RAID 1, and also without requiring the complex control mechanism of traditional RAID 5-type systems.

According to a further aspect of the present invention, there is provided a method of storing a data file, the method comprising: fragmenting the data file into plural data file fragments; and storing each of the fragments on a respective independent storage medium, wherein in with each fragment, metadata is stored identifying the location of at least one of the other fragments.

By storing each of the fragments on a respective independent storage medium a method of storage is provided in which distributed storage is enabled whilst simultaneously not requiring the provision of a complex and expensive central controller with knowledge of the location of each of the fragments of the data file.

Examples of the present invention will now be described with reference to the accompanying drawings, in which:

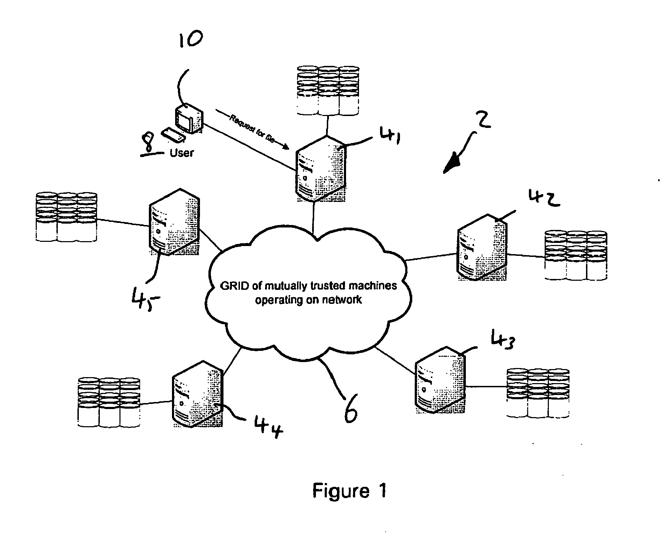

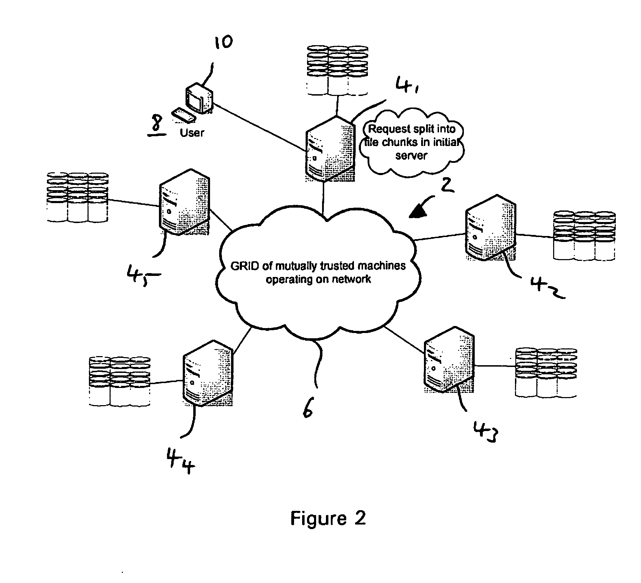

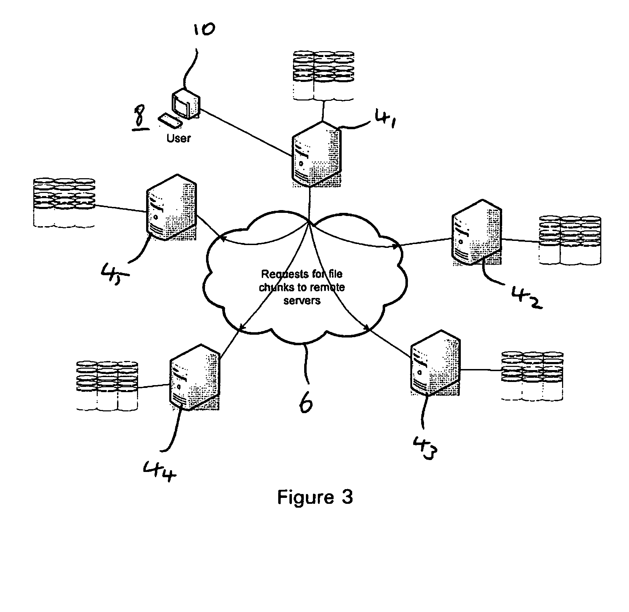

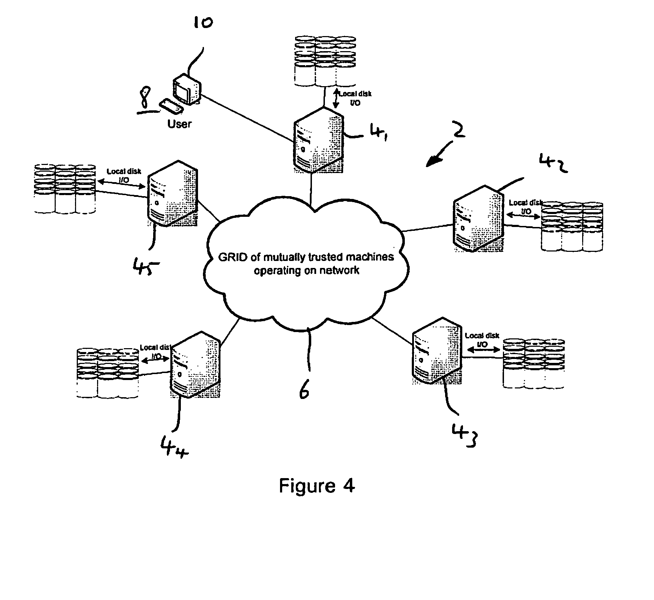

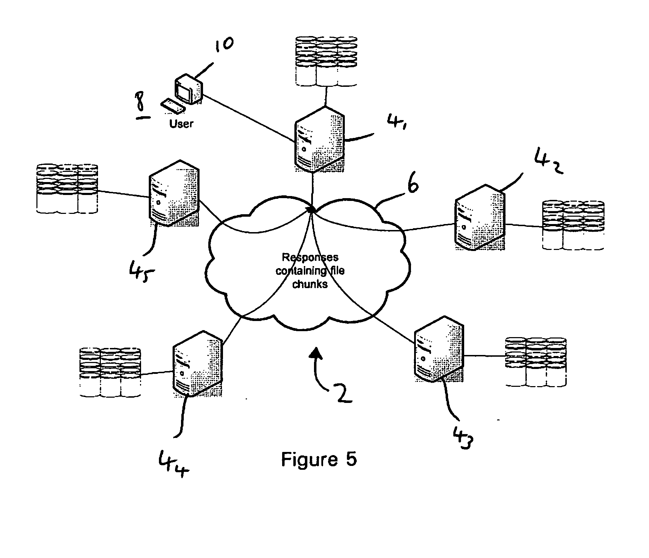

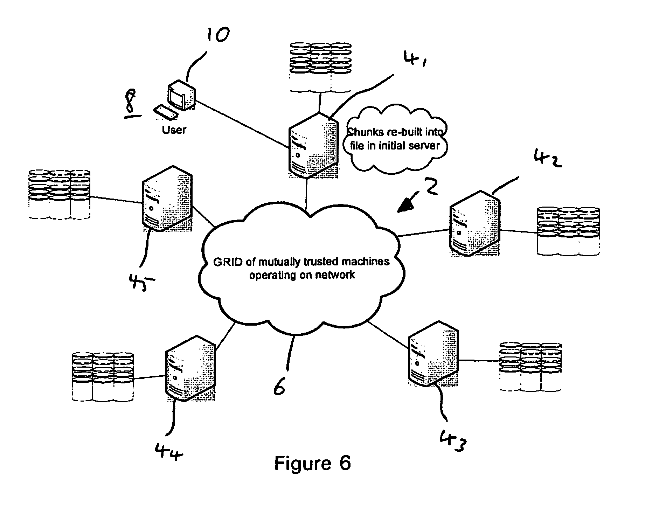

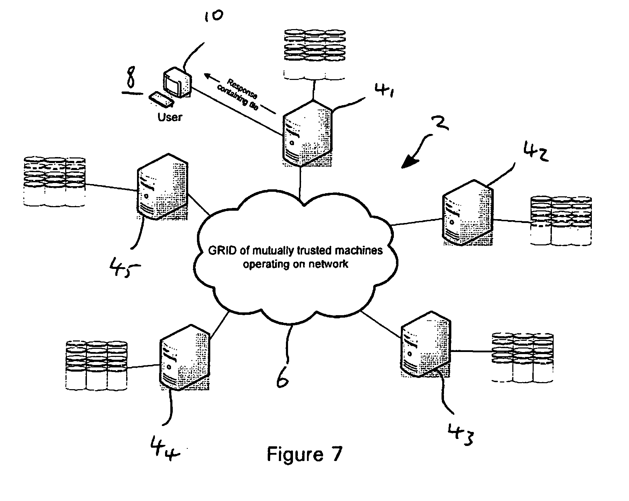

Figures 1 to 7 shows a schematic representation of a network of computers executing the steps of a method according to a particular example of an embodiment of the present invention.

Figure 1 shows a network 2 of connected servers 4₁ to 4₅ defining in combination a data back-up system. Each of the servers 4₁ to 4₅ is connected to a network 6, such as the internet. The servers 4₁ to 4₅ are therefore able to communicate with each other via the network 6. It is preferred that GRID technology is utilised. As will be explained below, the use of a GRID of mutually trusted machines operating on a network enables significant performance benefits to be achieved. The typical characteristics of a GRID are that they enable secure and restricted access of remote machines in an un-trusted environment (for example a network of a couple of dozen computers in the full internet) to share resources for a given task. Typically, a GRID is formed by a plurality of computers being interconnected using GRID protocols. GRID software running on these machines takes care of all the security actions and results in permitting each remote user a set of actions based on their user credentials. This action list can be either substantial or minimal depending on what the machine owner gives permission for.

Referring to Figure 1, a user 8 working on a computer 10 initially desires to store a file in a distributed manner, whilst, in this particular example, also providing redundancy in the provision of a particular data file. Accordingly, when a file is saved by the user 8 the server 4₁ that is local to the user 8 is tasked with ownership of the data file. The server 4₁ splits the file into equal fragments and calculates an additional fragment such as a parity fragment. The description herein relates to a RAID 5 type configuration in which a file can be recovered even if one of its fragments is lost, by use of calculation of an XOR function with the other fragment. As explained above, in fact, higher levels of RAID protection may also be utilised, enabling recovery of a file when more than one of the fragments of the actual file data are lost.

The fragments of data, i.e. the actual fragments of the file and the parity fragment are sent by the server 4₁ to other servers connected to the network. One fragment of the data file and the parity fragment is sent to each of the servers 4₂ to 4₅. In other words, where the file has been split into four fragments, there are five data fragments in total, four fragments of the file itself and a fifth fragment which is the parity fragment. One of the five fragments is stored locally to each of the servers 4₁ to 4₅.

To avoid the need for a complex centralised controller, or indeed for the server 4₁ local to the user to operate as a centralised controller, the server 4₁ appends to each of the fragments the location of the other fragments of the file. Thus, possession of one fragment only, allows a user to locate the other fragments of the file should the first server 4₁ become unavailable. In fact, it is only necessary that the location of one of the other fragments are appended but it is preferable that the location of at least two of the other fragments are appended so long as in combination the location of each fragment is stored twice so that on failure of one site, each of the fragments can be retrieved.

As an example, in the storage servers, the fragments are referred to by a naming system such as <filename>.ch1, <filename>.ch2 etc. Thus a file named analysis.xls becomes analysis.xls.ch1, analysis.xls.ch2 and so on. This enables a storage server to search for a file named analysis.ch* and find its stored fragment and so find the location of the other fragments on the other servers.

When a file is needed by a user 8 the user's PC 10 first accesses the server (4₁ in this case) that is meant to own the data. In other words, it accesses the server local to the user. If this server is available, the server request the fragments it requires from the other storage servers connected to the network and will return the file to the user's machine 10. However, if the first server is not available, the user's machine will access another server in the GRID and request the file from that server. The second accessed server then knows that the first server is unavailable. The second server, e.g. 4₅ then requests fragments of the file from the other storage servers 4₂ to 4₄ and is thus able to reconstruct the file and return it to the user's machine 10.

Since knowledge of the location of only one of the fragments of the file is sufficient to determine (either directly or through the metadata of other of the fragments) the location of all of the other fragments of the file, no complex centralised controller that knows the location of each of the fragments is required. Rather, the user must merely access directly one of the fragments of the file and from the appended data to this fragment, the other fragments of the file can be retrieved. To provide redundancy in a RAID 5 type system it is necessary that each fragment has appended to it meta data identifying the location of at least two other fragments.

The means by which the lost fragment can be recovered are well known. In a RAID 5 system, the parity fragment is determined by obtaining an XOR function of all of the other fragments. This is what is done when the parity fragment is initially calculated prior to the sending out of each of the fragments and the parity fragment to respective servers connected to the network 2.

It will be appreciated that in the example described above, each of the locations of the storage servers 4₁ to 4₅ may be remote from the others. Thus, if some natural disaster befalls the location of one of the servers, the file will still be accessible and retrievable by a user. However, it is not essential that such an arrangement is provided. It may be that each of the fragments is stored on a separate hard disk associated with a common server, i.e. at a common physical location. Again, the benefit provided by embodiments of the present invention is that no complex centralised control is required with knowledge of the location of each of the fragments of data file. Rather, knowledge of the location of only two of the fragments (where RAID 5 is used) is always sufficient to ensure that in the event of failure of one of these storage devices, the file can still be retrieved and returned to a user as required.

In use, the server a user accesses to obtain a file is referred to as the fragment registry as it has stored on it the location of at least two of the fragments. As explained above, it need only know where two of the fragments are (in a RAID 5 configuration) to enable the entire file to be retrieved in the event of failure of one of the other servers. In practice, there need not be just a single fragment registry. Indeed, in a preferred example a fragment registry is provided at each location at which there are users.

The fragment registry is configured to fragment the files and to calculate the parity data for files. Use of the system described above may also take advantage of a RAID 1 type system rather than RAID 5, due to the size or frequency of access.

The requests submitted to a user's local storage system, in one example, are GRIDftp requests (or an equivalent). GRIDftp is a known extension of FTP (file transfer protocol) that is designed to be more efficient in a geographically distributed environment, e.g. that typical of a GRID computing environment.

A user interface is provided that enables a user to browse files that have been fragmented and sent out to other storage media remote servers. It is preferred that each of the local data stores, each only holding a fragment of a file, will be protected according to some RAID-like scheme. The proposed extension of RAID to encompass wide distribution of file fragments is distinct from this local process.

Referring again to Figures 1 to 7, in the examples shown, a file has already been split into four fragments and a supplemental, fifth, fragment consisting of parity data has been generated. Each of the fragments is stored at one of the servers 4₁ to 4₅. Initially, a request is sent via the user 8 from the computer 10 to the server 4₁. The server 4₁, in this example, splits the request into four request fragments and generates a fifth request fragment for the parity fragment. In Figure 3, the request for a file fragment are sent to each of the servers 4₂ to 4₅ one to each in this example. Referring to Figure 4, at each of the servers, local input/output occurs as the file fragment is retrieved from storage local to the particular server. Referring to Figure 5, the file fragments are all returned to the server 4₁ where the file is reconstructed and then returned to the user's computer 10. Last, as shown in Figure 7, the reconstructed file is returned to the user 10 from the local server 4₁.

In the example described above, the location of each of the file fragments was determined by the fragment registry at the first server 4₁. In the event that the location of only one of the fragments was known, a single request from the server 4₁ would have been sent to the other server at which the file fragment was stored. Then, based on the metadata associated with the stored file fragment, the location of one of the remaining file fragments would be determined, from this, the location of a further fragment can be determined and so forth until the whole file is retrieved for the user. To provide redundancy, the location of at least two of the other fragments would be required in a RAID 5 type system. However, even if redundancy were not provided the system would have significant benefit over known distributed or multi-disk storage systems in that no complex and expensive central controller is required with knowledge of the location of each fragment of any particular file.

The invention, in embodiments, provides significant advantages in cost. Conventionally, for an organisation with multiple sites (say m sites) over which a data backup system can be split, the current storage cost to hold a single copy of the file system or data is 2x where x is the cost of the storage. In contrast, using the system described above, the new cost is mx/(m-1). For m = 5, this represents a 5x/4 cost in terms of storage requirement, thus representing a reduction in cost as compared to the previous system of 37.5%. Furthermore, if the cost of storage is taken to include items such as power consumption, rack space, office space, air conditioning and maintenance as well as the raw purchasing cost of the storage, then it can be seen that the benefit is significant.

A further advantage relates to security. Where each of the servers 4₁ to 4₅ stores a full copy of the data, if a physical theft of a server or associated local storage were to occur, then security would be breached as a full copy of the data would be in the hands of the thief. However, using the system described herein, no single site has a full copy of a data file and therefore it is not possible to perform a useful physical theft of a data file. Since much of the data that is likely to be contained in this kind of system is highly confidential and extremely sensitive, this provides a significant advantage.

Furthermore, the location information contained within the metadata can be easily encrypted for storage as it is not a large block of data. Normally encryption is unusual as it is computationally intensive and typically requires dedicated hardware, which is not cheap. Thus, the process itself becomes expensive where large amounts of data must be encrypted. By encrypting only a small portion of the total data stored (the locations of the other data fragments) it is possible to render physical theft absolutely useless.

Technically improved performance is also achieved in the case of an organisation with a geographically disbursed work force and a currently centralised repository with single mirror copy of data stored as a second storage device. A remote user wanting to access data on the central repository is restricted to obtaining it from one site, i.e. he is only able to access data from the site of the repository. Over a network, multiple location download of small fragments is more efficient and therefore the system described herein takes advantage of this.

Where double site failure protection is required, currently, the requirement for an organisation is to provide two separate mirror locations, i.e. in total defining a three way mirror scenario. For some smaller organisations this is more likely to be remote locations at which tape backups are stored with a tape backup also stored locally to the main system server. In other words, with known systems, 3x storage capacity is required for data of x capacity. If a fourth site is introduced and a double redundancy is included (i.e. using a RAID 6 type system) then each site will only require x/2 tape capacity. Thus, overall, this is a saving of x storage capacity compared to the three way mirror scenario described above. This advantage is achieved for higher order failures with the use of higher order RAID-like redundancy algorithms.

The invention described herein provides a novel and useful computer and network of computers for ensuring redundant access to a data file is available without significantly increasing either complexity of processing at a central server or data storage capacity requirements.

Embodiments of the present invention have been described with particular reference to the examples illustrated. However, it will be appreciated that variations and modifications may be made to the examples described within the scope of the present invention.

## Claims

1. A method of storing a data file, the method comprising:
fragmenting the data file into plural data file fragments;
generating at least one supplemental fragment to enable the data file to be reconstructed in the absence of one or more of the other data file fragments; and
storing each of the fragments on a respective independent storage medium, wherein in with each fragment, metadata is stored identifying the location of at least one of the other fragments.

2. A method according to claim 1, wherein in with each fragment, metadata is stored identifying the location of at least two of the other fragments.

3. A method according to claim 1 or 2; wherein the step of storing each of the fragments comprises storing each of the fragments on an independent storage medium located at a location remote from all of the others.

4. A method according to any of claims 1 to 3, wherein each of the independent storage media is associated with a respective computer being interconnected using GRID protocols.

5. A method according to claim 2, wherein at each of the independent storage media, a secondary level of redundancy is provided, locally in respect of the locally stored fragment.

6. A method according to any of claims 1 to 5, comprising encrypting the location of the at least one other fragment.

7. A computer for connection in a computer system comprising plural computers each connected to a common communications network and remote from each other and the said computer, the said computer having a processor, arranged to fragment a data file into plural data file fragments, the computer being arranged to send to each of the other computers connected to the common communications network one of the data file fragments, wherein each of the data file fragments includes metadata containing the location of at least one, preferably two, of the other fragments.

8. A computer according to claim 7, wherein the processor is arranged to generate a supplemental fragment related to the data file fragments, the supplemental fragment also including metadata containing the location of at least one, preferably two, of the other fragments and the computer being arranged to send the supplemental fragment to another of the computers connected in the computer system.

9. A computer according to claim 7 or 8, comprising storage for the storage of the fragment assigned to it.

10. A computer according to claim 9, wherein the computer is provided with a level of redundancy locally in respect of the locally stored fragment.

11. A computer according to claim 10, wherein the locally provided redundancy is a selected RAID level redundancy.

12. A computer system for connection to a common communications network, the computer system comprising plural computers each connected to the common communications network and each being remote from each other, one of said computers having a processor, arranged to fragment a data file into plural data file fragments, and to send to each of the other computers connected to the common communications network one of the data file fragments, each of the data file fragments having metadata including the location of at least one, preferably two, of the other fragments.

13. A computer system according to claim 12, wherein the said at least one computer is also arranged to generate a supplemental fragment related to the data file fragments, the supplemental fragment having metadata including the location of at least one, preferably two, of the data file fragments, the at least one computer being arranged to send the supplemental fragment to one of the other computers connected to the common communications network.

14. A computer system according to claim 12 or 13, wherein each of the computers of the computer system has locally provided storage for the storage of fragments.

15. A computer system according to any of claims 12 to 14, wherein at each of the computers a secondary level of redundancy is provided locally in respect of the locally stored fragment.

16. A method for retrieving a data file stored on a computer system according to claim 12, the method comprising:
requesting from a computer local to a user retrieval of the data file;
from the computer local to a user sending a request to each of the computers of the computer system requesting transmission to the local computer of the fragment stored on the respective computer;
at the local computer reconstructing the data file using the received file fragments of data and/or the supplemental fragment, wherein reconstruction occurs in the absence of one or more of the fragments.

17. A method of storing a data file, the method comprising:
fragmenting the data file into plural data file fragments; and
storing each of the fragments on a respective independent storage medium, wherein in with each fragment, metadata is stored identifying the location of at least one of the other fragments.

18. A computer having a processor and plural independent storage media, the processor being arranged to fragment a data file into plural data file fragments, the computer being arranged to send to each of the independent storage media one of the fragments of the data file, wherein each of the fragments includes metadata containing the location of at least one, preferably two, of the other fragments.

19. A computer according to claim 18, the computer being arranged to generate a supplemental fragment related to the data file fragments and to send the supplemental fragment to a different one of the independent storage media.
